# EUROPEAN PATENT APPLICATION

(11) **EP 4 834 094 A1**
(43) Date of publication of application: **04.11.2026**
(21) Application number: 25747828.9
(22) Date of filing: 24.01.2025
(51) Int. Cl.: A01D 75/18, A01D 75/20, A01D 34/82, A01D 34/73

(54) **ROBOT, CONTROL METHOD FOR ROBOT, AND COMPUTER STORAGE MEDIUM**

(30) Priority: 04.02.2024 CN 202410159232; 04.02.2024 CN 202420275502 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Shaojie, Shenzhen, Guangdong 518000 (CN); XU, Yuanjun, Shenzhen, Guangdong 518000 (CN); PEI, Lei, Shenzhen, Guangdong 518000 (CN); YANG, Jian, Shenzhen, Guangdong 518000 (CN)
(74) Representative: Huang, Liwei
(86) International application number: PCT/CN2025/074709
(87) International publication number: WO 2025/162260

(57) **Abstract**

A robot, a method for controlling a robot, and a computer storage medium are provided. The robot comprises a robot body and a cutting mechanism. The robot body comprises a vehicle body and a mobility assembly, and the mobility assembly is disposed on two sides of the vehicle body and configured to drive the vehicle body to travel. The cutting mechanism comprises a connecting assembly and a cutting assembly. The cutting assembly is connected to the vehicle body through the connecting assembly and is switchable, relative to the vehicle body, between a first region and a second region. The second region is closer to the vehicle body than the first region. when the cutting assembly is in the first region, the cutting assembly operates; when the cutting assembly is in the second region, the cutting assembly ceases operation.

## Description

### TECHNICAL FIELD

This disclosure relates to the field of mowing equipment, and in particular to a robot, a method for controlling a robot, and a computer storage medium.

### BACKGROUND

With the continuous improvement of people's living standards, people have increasingly high requirements for leisure environments, and private gardens, parks, playgrounds, and other sites have become preferred places for leisure and recreation. At present, robots are used to trim grass in private gardens, parks, playgrounds, and other lawns from time to time to maintain an attractive appearance.

Generally, a robot trims cutting objects on a lawn under the drive of a mobility assembly. However, a cutting assembly on an existing robot has a poor cutting effect in cutting environments such as boundaries or corners.

### SUMMARY

This disclosure provides a robot, a method for controlling a robot, and a computer storage medium. The robot is capable of switching between a first region and a second region to adapt to safe operation in various different cutting environments. Meanwhile, in response to the cutting assembly moving from one position of the first region toward the second region, a cutting speed of the cutting assembly gradually decreases until the cutting assembly stops operating, thereby preventing the cutting assembly from being damaged during cutting.

In a first aspect, this disclosure provides a robot, comprising:
a robot body comprising a vehicle body and a mobility assembly, the mobility assembly being disposed on the vehicle body and configured to drive the vehicle body to travel;
a cutting mechanism comprising a connecting assembly and a cutting assembly, the cutting assembly being connected to the vehicle body through the connecting assembly and being switchable, relative to the vehicle body, between a first region and a second region;
wherein the second region is closer to the vehicle body than the first region, when the cutting assembly is in the first region, the cutting assembly is configured to operate, and when the cutting assembly is in the second region, the cutting assembly is configured to stop operating.

In a second aspect, this disclosure further provides a robot, the robot comprising:
a vehicle body;
a cutting mechanism movably connected to the vehicle body to be deployed or retracted relative to the vehicle body, the cutting mechanism being further configured to perform a cutting action;
a mobility assembly configured to drive the vehicle body to travel ;
a detection assembly configured to detect a position of the cutting mechanism;
a controller electrically connected to the detection assembly, the cutting mechanism, and the mobility assembly, and configured to:
   control, based on the position of the cutting mechanism, the cutting mechanism the mobility assembly to perform a corresponding operation.

In a third aspect, this disclosure further provides a method for controlling a robot, the robot comprising a vehicle body and a cutting mechanism, the cutting mechanism being movably connected to the vehicle body to be deployed or retracted relative to the vehicle body and being further configured to perform a cutting action;
the method comprising:
obtaining a position of the cutting mechanism;
controlling, based on the position of the cutting mechanism, the cutting mechanism or the mobility assembly to perform a corresponding operation.

In a fourth aspect, this disclosure further provides a robot, the robot comprising at least a memory and a processor;
the memory being configured to store a computer program;
the processor being configured to execute the computer program and, in response to executing the computer program, cause the robot to implement the method of any one of claims 20 to 25.
In a fifth aspect, this disclosure further provides a non-transitory computer-readable storage medium storing a computer program, wherein the computer program is executable by a processor to cause a robot having the processor mounted therein to implement the foregoing control method.

The technical solutions provided by embodiments of this disclosure may include the following beneficial effects. This disclosure refers to a robot, a method for controlling a robot, and a computer storage medium. The robot comprises a robot body and a cutting mechanism. The robot body comprises a vehicle body and a mobility assembly. The cutting mechanism comprises a connecting assembly and a cutting assembly. The cutting assembly is connected to the vehicle body through the connecting assembly, and the mobility assembly is configured to drive the vehicle body to travel, so that the cutting assembly can cut a cutting object while the vehicle body is traveling. The cutting assembly is switchable, relative to the vehicle body, between a first region and a second region, so that the cutting assembly can cut an edge region having certain undulations and can also ensure a maximum region during cutting of the edge region.

Specifically, in response to the cutting assembly moving from one position of the first region toward the second region, the cutting speed of the cutting assembly decreases. In response to the cutting assembly being in the second region, the cutting assembly stops operating. That is, normal cutting of the cutting assembly between the first region and one position of the first region is ensured. when the cutting assembly moving from the position toward the second region or entering the second region, the cutting speed of the cutting assembly decreases or even the cutting assembly stops operating, so that the cutting assembly can be effectively protected and the cutting assembly can also be prevented from injuring a person.

It should be understood that the foregoing general description and the following detailed description are merely exemplary and explanatory and do not limit this disclosure.

### BRIEF DESCRIPTION OF THE DRAWINGS

To more clearly describe the technical solutions in embodiments of this disclosure, the accompanying drawings required for describing the embodiments are briefly introduced below. Apparently, the accompanying drawings described below are merely some embodiments of this disclosure, and a person skilled in the art may obtain other drawings based on these drawings without creative effort.
FIG. 1 is a schematic structural diagram of a cutting mechanism according to an embodiment of this disclosure;
FIG. 2 is a schematic cross-sectional diagram of the cutting mechanism in FIG. 1;
FIG. 3 is a schematic diagram in which the cutting mechanism deflects in a horizontal plane and is in an extended state when the vehicle body in FIG. 1 is placed horizontally;
FIG. 4 is a schematic diagram in which the cutting mechanism in FIG. 1 contacts an obstacle;
FIG. 5 is a schematic diagram in which the cutting mechanism in FIG. 1 is in a compressed state;
FIG. 6 is a partial cross-sectional schematic diagram of the cutting mechanism in FIG. 1;
FIG. 7 is a cross-sectional schematic diagram of the cutting assembly in FIG. 1;
FIG. 8 is an exploded schematic diagram of the cutting assembly in FIG. 1;
FIG. 9 is an exploded schematic diagram of the protective cover in FIG. 1;
FIG. 10 is a schematic structural diagram of the cutting blade in FIG. 1;
FIG. 11 is an exploded schematic diagram of the connecting arm in FIG. 1;
FIG. 12 is an exploded schematic diagram of the mounting assembly in FIG. 1.
FIG. 13 is a block diagram of a module structure of a robot according to an embodiment of this disclosure;
FIG. 14 is a schematic structural diagram of a cutting mechanism of a robot according to an embodiment of this disclosure;
FIG. 15 is a schematic structural diagram of a cutting assembly 100 of a robot 1 according to an embodiment of this disclosure;
FIG. 16 is a schematic scenario diagram of deployment and retraction of a cutting mechanism in a robot according to an embodiment of this disclosure;
FIG. 17 is a schematic scenario diagram of collision between a cutting mechanism and a vehicle body in a robot according to an embodiment of this disclosure;
FIG. 18 is a schematic flowchart of a method for controlling a robot according to an embodiment of this disclosure;
FIG. 19 is a schematic structural block diagram of another robot according to an embodiment of this disclosure.

### Description of Reference Numerals:

1000, cutting mechanism; 2000, robot body;
100, cutting assembly; 101, first region; 102, second region; 10, protective cover; 11, cover body; 111, mounting hole; 1111, counterbore structure; 12, protective edge strip; 121, anti-collision portion; 122, connecting portion; 123, edging structure; 20, blade disc; 21, cutting blade; 211, cutting segment; 212, protective segment; 213, blade mounting portion; 22, rotating disc; 221, fan structure; 30, drive motor; 31, motor body; 32, connecting housing; 311, output shaft; 40, bearing assembly; 50, abutting member; 60, transmission member;
200, connecting arm; 201, first connecting rod; 2011, first connecting portion; 2012, second connecting portion; 2013, threaded hole; 202, second connecting rod; 2021, first coupling portion; 2022, second coupling portion; 203, adjustment member; 2031, adjustment screw; 2032, elastic member;
300, mounting assembly; 301, mounting portion; 3011, limiting groove; 302, rotating portion; 3021, first mounting hole; 3022, second mounting hole; 3023, limiting post; 303, biasing member; 304, connecting shaft;
400, obstacle;
500, vehicle body; 501, preset portion; 600, mobility assembly; 700, detection assembly; 800, controller; 901, processor; 902, memory.

### DETAILED DESCRIPTION OF EMBODIMENTS

The following clearly and completely describes the technical solutions in embodiments of this disclosure with reference to the accompanying drawings in the embodiments of this disclosure. Apparently, the described embodiments are some rather than all embodiments of this disclosure. All other embodiments obtained by a person of ordinary skill in the art based on the embodiments of this disclosure without creative effort fall within the protection scope of this disclosure.

In a lawn maintenance process, lawn mowing is the most tedious and complicated operation. To reduce labor intensity and cost, robots, such as robotic lawn mowers, have been developed. At present, a considerable number of robotic lawn mowers are provided with cutting blades to mow lawns through rotation of the cutting blades. However, current robotic lawn mowers have a poor mowing effect on grass at edges of obstacles, such as walls.

Based on this, The present disclosure provides a robot, a control method for a robot, and a computer storage medium, and aims to intelligently control a cutting action of the robot, thereby improving a cutting performance of the robot on grass at an edge of an obstacle, such as a wall.

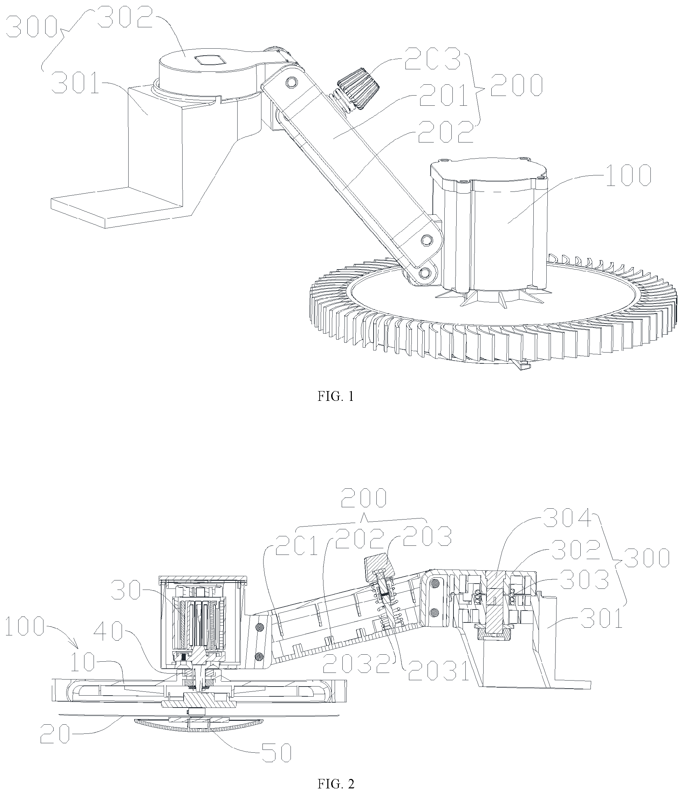

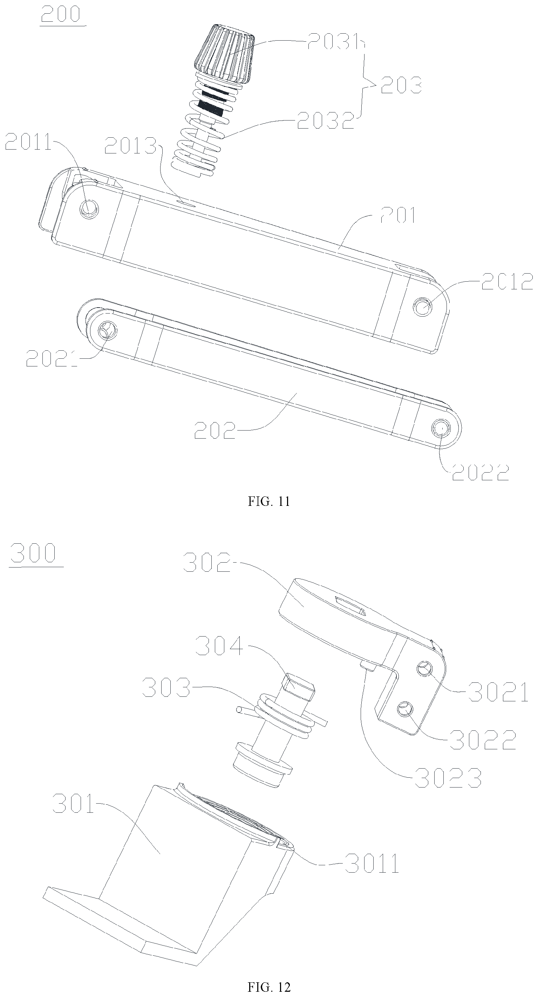

As shown in FIG. 1 to FIG. 12, according to a first aspect of the present disclosure, this disclosure provides a robot, comprising a robot body 2000 and a cutting mechanism 1000. The robot body 2000 comprises a vehicle body and a mobility assembly. The cutting mechanism 1000 is disposed on the vehicle body, and the mobility assembly is disposed on the vehicle body and configured to drive the vehicle body to travel, so that the cutting mechanism 1000 can perform cutting during travel.

It should be noted that the mobility assembly may be disposed at any position of the vehicle body, including but not limited to two sides of the vehicle body. This disclosure is not limited thereto, provided that the vehicle body can be driven to travel.

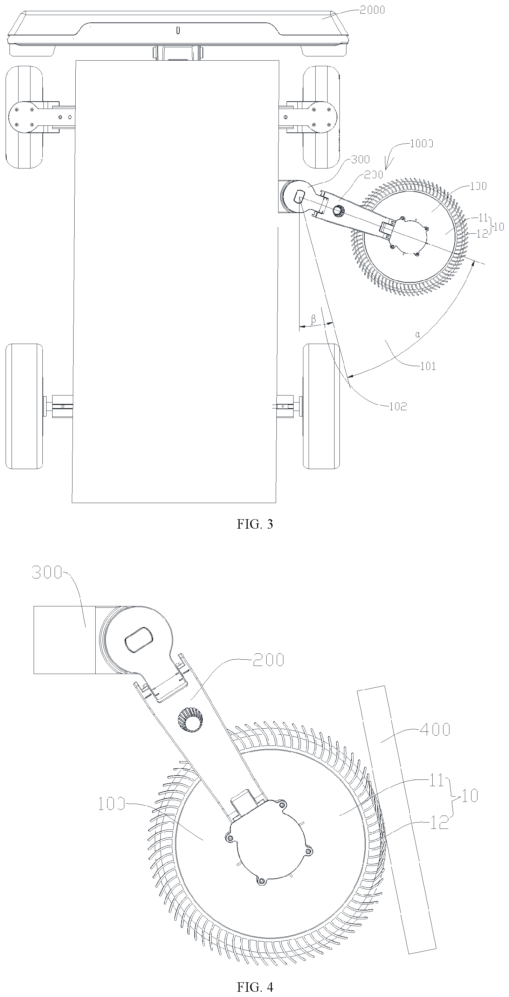

In this embodiment, the cutting mechanism 1000 comprises a connecting assembly and a cutting assembly 100. The cutting assembly 100 is connected to the vehicle body through the connecting assembly and is switchable, relative to the vehicle body, between a first region 101 and a second region 102, so that the cutting assembly 100 can perform a cutting operation in the first region 101 and stop the cutting operation in the second region 102 to protect the cutting assembly 100 and also avoid injury to a person by the cutting assembly 100. As shown in FIG. 4 to FIG. 5, the second region 102 is closer to the vehicle body than the first region 101. The cutting assembly 100 operates in response to being in the first region 101, and the cutting assembly 100 stops operating in response to being in the second region 102, thereby protecting the cutting assembly 100 and also avoiding injury to a person by the cutting assembly 100.

In an alternative embodiment, an area of the first region 101 is greater than an area of the second region 102, so as to ensure a maximum cutting region for the cutting assembly 100 when cutting edge regions such as passage edges, wall surfaces, or fences, thereby ensuring a cutting performance. Meanwhile, in response to the cutting assembly 100 moving from one position of the first region 101 toward the second region 102, the cutting speed of the cutting assembly 100 decreases. In response to the cutting assembly 100 being in the second region 102, the cutting assembly 100 stops operating. In this way, normal operation of the cutting assembly 100 in the first region 101 can be ensured. In response to the cutting assembly 100 moving to one position of the first region 101 and then continuing to move from that position toward the second region 102, the cutting speed of the cutting assembly 100 decreases until the cutting assembly 100 is in the second region 102, at which point the cutting assembly 100 stops operating. This effectively prevents the cutting assembly 100 from being damaged during cutting and also prevents the cutting assembly 100 from injuring a human body or the like.

It should be noted that the cutting speed of the cutting assembly 100 decreases during movement of the cutting assembly 100 from the first region 101 toward the second region 102. This may include, but is not limited to, the cutting speed of the cutting assembly 100 gradually decreasing in response to the cutting assembly 100 moving from a first position toward a second position in the first region 101; or, in response to the cutting speed of the cutting assembly 100 at the first position being a first speed and the cutting assembly 100 being at the second position, the cutting speed of the cutting assembly 100 being a second speed, the second speed being less than the first speed. The second position is closer to the second region 102 than the first position. For example, the first region 101 refers to a region formed by the cutting assembly 100 continuing to deflect by an angle α on a side of the second region 102 away from the vehicle body, after the cutting assembly 100 deflects by an angle beta relative to the vehicle body to form the second region 102. That is, the cutting assembly 100 can cut edge regions such as passage edges, wall surfaces, or fences in the first region 101 to ensure the cutting effect of the cutting assembly 100. In addition, the cutting assembly 100 can deflect arbitrarily in the first region 101, so that the cutting assembly 100 can cut edge regions having certain undulations and also ensure that the cutting assembly 100 has a cutting region with a maximum deployment angle in the edge regions.

In response to the cutting assembly 100 being in the first region 101 and deflecting toward a side of the second region 102, when a deflection angle of the cutting assembly 100 is less than α, the cutting assembly 100 performs a cutting operation. When the deflection angle of the cutting assembly 100 is γ and γ is within the range of α, the cutting speed of the cutting assembly 100 gradually decreases in response to the cutting assembly 100 continuing to deflect toward the side of the second region 102, and the cutting speed of the cutting assembly 100 remains unchanged in response to the cutting assembly 100 continuing to deflect in a direction opposite to the second region 102. γ may be any value not less than α.

In an optional embodiment, the connecting assembly comprises a mounting assembly 300. The mounting assembly 300 comprises a rotating portion 302 and a mounting portion 301 connected to the vehicle body. The cutting assembly 100 is rotatably mounted on the mounting portion 301 through the rotating portion 302 and can deflect between the first region 301 and the second region 302. Accordingly, when the cutting assembly 100 cuts edge regions such as passage edges, wall surfaces, or fences and contacts an obstacle 400 such as a passage edge, a wall surface, or a fence, the obstacle 400 such as a passage edge, a wall surface, or a fence applies to the cutting assembly 100 a reverse force that causes deflection toward the second region 102, or the cutting assembly 100 automatically deflects toward the second region 102 under the drive of the connecting assembly, so that the cutting assembly 100 can travel along edges such as passage edges, wall surfaces, or fences to cut edge regions while avoiding collision with the obstacle. However, in response to the cutting assembly 100 colliding with the obstacle 400 and traveling toward a front face of the obstacle, the obstacle 400 continuously squeezes the cutting assembly 100, causing the deflection angle of the cutting assembly 100 to be greater than γ or even exceed αα. At this time, the cutting speed of the cutting assembly 100 gradually decreases or even stops operating, thereby protecting the cutting assembly 100, or protecting a human body from being injured by the cutting assembly 100 when the obstacle 400 is the human body.

In an optional embodiment, the connecting assembly comprises a biasing member 303. The biasing member 303 is disposed between the rotating portion 302 and the mounting portion 301 and configured to drive the rotating portion 302 to rotate toward the first region 101. The biasing member 303 can also provide a buffering force when the cutting assembly 100 collides with the obstacle 400, thereby reducing an impact force applied to the cutting assembly 100 during collision with the obstacle 400, avoiding damage to the cutting assembly 100, and extending a service life of the cutting assembly 100.

In an optional embodiment, the biasing member 303 comprises a spring structure. a first end of the spring structure abuts against the rotating portion 302, and a second end of the spring structure abuts against the mounting portion 301.

For example, the spring structure includes, but is not limited to, a torsion spring. The torsion spring is sleeved outside the connecting shaft 304, and two ends of the torsion spring are respectively connected to the rotating portion 302 and the mounting portion 301, so that the rotating portion 302 can always maintain an elastic force toward the first region 101. when the cutting assembly 100 is in the first region 101 and contacts the obstacle 400, an impact force of the obstacle 400 on the cutting assembly 100 is greater than an elastic force of the biasing member 303, and the biasing member 303 deforms to buffer an impact force generated when the obstacle 400 collides with the cutting assembly 100. Meanwhile, the cutting assembly 100 can rotate relative to the mounting portion 301 toward the second region 102 to form an avoidance position for avoiding the obstacle 400, and at this time the rotation speed of the cutting assembly 100 gradually decreases. In response to the cutting assembly 100 completely entering the second region 102, the cutting assembly 100 stops operating.

In an optional embodiment, the robot comprises a detection assembly. The detection assembly is disposed on at least one of the vehicle body or the connecting assembly and configured to detect a deflection angle of the cutting assembly 100, so as to control the cutting speed of the cutting assembly 100.

For example, the detection assembly comprises a force sensor electrically connected to the cutting assembly 100. The force sensor is disposed between the mounting portion 301 and the rotating portion 302 and configured to detect a force condition of the torsion spring, so that the cutting assembly 100 can control its cutting rotation speed or stop operating based on force data detected by the force sensor.

Specifically, when the force data received by the cutting assembly 100 being greater than a predetermined value, the drive motor 30 stops operating, and at this time the cutting assembly 100 completely enters the second region 102. In response to the force data received by the drive motor 30 being less than the predetermined value, the cutting assembly 100 controls its output speed based on the magnitude of the force data, so that the cutting assembly 100 can cut at different speeds in the first region 101. Alternatively, in response to the force data being less than a first predetermined value, the cutting assembly 100 maintains its original cutting speed; in response to the force data approaching the predetermined value from the first predetermined value, that is, in response to the deflection angle of the cutting assembly 100 being greater than γ, the cutting speed of the cutting assembly 100 gradually decreases; in response to the force data being minimum, the cutting speed of the cutting assembly 100 is maximum, and the cutting assembly 100 is located on a side of the first region 101 away from the second region 102; in response to the force data approaching the predetermined value, the cutting speed of the cutting assembly 100 gradually decreases until the force data is equal to the predetermined value, at which point the cutting assembly 100 stops operating.

In an optional embodiment, the detection assembly comprises an angle sensor configured to collect a deflection angle of the cutting assembly 100, and can then control the cutting speed of the cutting assembly 100 based on a detection value of the angle sensor.

For example, the angle sensor is mounted between the rotating portion 302 and the mounting portion 301 and can effectively identify whether the rotating portion 302 rotates relative to the mounting portion 301, and then measure a deflection angle of the rotating portion 302 relative to the mounting portion 301. In response to a deflection angle by which the rotating portion 302 deflects from a maximum deployment angle toward a side of the vehicle body being less than α, the cutting assembly 100 is in the first region 101, and the cutting speed of the cutting assembly 100 may remain unchanged. Alternatively, in response to the deflection angle of the rotating portion 302 being between γ and α, the cutting speed of the cutting assembly 100 gradually decreases, γ being a deflection angle within α. In response to the deflection angle by which the rotating portion 302 deflects being greater than α, the cutting assembly 100 enters the second region 102, and the cutting assembly 100 stops operating.

It should be noted that the detection assembly may alternatively be another sensor, such as a travel switch or a Hall sensor, and this disclosure is not limited thereto. In an optional embodiment, the mounting portion is provided with a first connecting end surface, the rotating portion 302 is provided with a second connecting end surface, and a limiting member is connected between the first connecting end surface and the second connecting end surface. The limiting member is configured to limit a deflection angle of the rotating portion 302 relative to the mounting portion 301. That is, the cutting assembly 100 can be switched only between the second region 102 corresponding to the deflection angle beta and the first region 101 corresponding to the deflection angle α.

In an optional embodiment, the mounting assembly 300 further comprises a connecting shaft 304, and the rotating portion 302 is rotatably connected to the mounting portion 301 through the connecting shaft 304. Specifically, the first connecting end surface and the second connecting end surface are fitted and connected, and the connecting shaft 304 penetrates between the first connecting end surface and the second connecting end surface and is configured to rotatably mount the rotating portion 302 on the mounting portion 301.

In an optional embodiment, the limiting member comprises a limiting groove 3011 and a limiting post 3023 mated with the limiting groove 3011. One of the limiting groove 3011 and the limiting post 3023 is disposed on the first connecting end surface, and another one of the limiting groove 3011 and the limiting post 3023 is disposed on the second connecting end surface, so as to limit a rotation position of the rotating portion 302 when the rotating portion 302 rotates relative to the mounting portion 301, thereby enabling the cutting assembly 100 to switch between the first region 101 and the second region 102.

For example, the limiting groove 3011 is disposed on the first connecting end surface, and the limiting post 3023 is disposed on the second connecting end surface; or the limiting groove 3011 is disposed on the second connecting end surface, and the limiting post 3023 is disposed on the first connecting end surface.

In an optional embodiment, as shown in FIG. 1, FIG. 2, and FIG. 11, the connecting assembly comprises a connecting arm 200. The cutting assembly 100 is mounted on the rotating portion 302 through the connecting arm 200. The connecting arm 200 is rotatable relative to the rotating portion 302, and a rotation axis about which the connecting arm 200 rotates around the rotating portion 302 is perpendicular to a rotation axis about which the rotating portion 302 rotates around the mounting portion 301, so that the cutting assembly 100 can rotate relative to the vehicle body in a horizontal direction and/or a height direction, thereby adjusting a height and an extension length of the cutting assembly 100.

In an optional embodiment, the connecting arm 200 can rotate about a first axis relative to the rotating portion 302, the rotating portion 302 can rotate about a second axis relative to the mounting portion 301, and the first axis is perpendicular to the second axis.

In an optional embodiment, the connecting arm 200 comprises a first connecting rod 201, a second connecting rod 202, and an adjustment member 203. The first connecting rod 201 and the second connecting rod 202 are connected between the rotating portion 302 and the cutting assembly 100, and the adjustment member 203 is connected between the first connecting rod 201 and the second connecting rod 202 and configured to adjust a height of the cutting assembly 100 relative to the ground, thereby adjusting a cutting height of a cutting object.

In an optional embodiment, the cutting assembly 100 is provided with two first connecting holes spaced apart in a height direction, and the rotating portion 302 is provided with a first mounting hole 3021 and a second mounting hole 3022 spaced apart. Two ends of the first connecting rod 201 are respectively rotatably connected to the first mounting hole 3021 and one of the first connecting holes, and two ends of the second connecting rod 202 are respectively rotatably connected to the second mounting hole 3022 and another one of the first connecting holes, so that the cutting assembly 100 can be floatingly connected to the rotating portion 302 through the first connecting rod 201 and the second connecting rod 202.

For example, two ends of the first connecting rod 201 are respectively provided with a first connecting portion 2011 and a second connecting portion 2012. Two ends of the second connecting rod 202 are respectively provided with a first coupling portion 2021 and a second coupling portion 2022. The first connecting portion 2011 and the first coupling portion 2021 are rotatably connected to the two first connecting holes, and the second connecting portion 2012 and the second coupling portion 2022 are correspondingly connected to the first mounting hole 3021 and the second mounting hole 3022. The adjustment member 203 is threadedly connected to the first connecting rod 201 and can extend toward or retract from one side of the second connecting rod 202, so that a floating angle of the cutting assembly 100 can be changed by adjusting a spacing between the first connecting rod 201 and the second connecting rod 202, thereby adjusting the cutting height.

In an optional embodiment, the adjustment member 203 comprises an adjustment screw 2031 and an elastic member 2032. The first connecting rod 201 is provided with a threaded hole 2013, the adjustment screw 2031 is threadedly connected in the threaded hole 2013 and extends to the second connecting rod 202, and the elastic member 2032 is disposed between the first connecting rod 201 and the second connecting rod 202.

In an optional embodiment, the cutting assembly comprises a drive assembly, a blade disc 20, and a protective device. The blade disc 20 is provided with a cutting blade 21. The drive assembly comprises a drive motor 30. The drive motor 30 is connected to the vehicle body through the connecting assembly, and the protective device is disposed outside the cutting blade 21 and configured to protect the cutting blade 21, thereby avoiding damage caused by collision between the cutting blade 21 and the obstacle 400. The drive motor 30 is drivingly connected to the cutting blade 21 and configured to drive the cutting blade 21 to rotate to perform a cutting operation.

In an optional embodiment, the drive motor 30 comprises a motor body 31 and a connecting housing 32. The motor body 31 is mounted inside the connecting housing 32, the connecting housing 32 is connected to the vehicle body through the connecting assembly, and the protective device is mounted on the connecting housing 32.

In an optional embodiment, the protective device is provided, on a side facing away from the vehicle body, with a protective edge strip 12 made of a flexible material. At least a part of the protective edge strip 12 is disposed toward an outer side of the cutting blade 21 and can approach an outer end surface of the cutting blade 21 during compression, so as to reduce an edge distance between the cutting blade 21 and the protective device, thereby effectively cutting a cutting object at an edge of the protective device.

For example, the protective device comprises a protective cover 10 at least partially made of a flexible material. The protective cover 10 covers an outer side of the cutting blade 21 and is configured to effectively protect the cutting blade 21, thereby avoiding damage caused by collision between the cutting blade 21 and the obstacle 400. The protective edge strip 12 is at least a part of the protective cover 10 made of a flexible material. An outermost end of the cutting blade 21 is located between an inner side and an outer side of the protective edge strip 12, and a length of the protective edge strip 12 after compression is less than a maximum length between the outermost end of the cutting blade 21 and the outer side of the protective edge strip 12. In this way, the cutting blade 21 can be effectively protected, and an edge distance between the cutting blade 21 and the protective cover 10 can also be reduced, so that the cutting blade 21 can effectively cut a cutting object at an edge of the protective cover 10.

After the foregoing technical solutions are adopted, because at least part of the protective cover 10 is the protective edge strip 12 made of a flexible material, and the protective edge strip 12 is disposed outside the cutting blade 21 and extends beyond the outermost end of the cutting blade 21, the cutting blade 21 can be effectively protected, thereby preventing harm caused by the cutting blade 21 to the blade itself, a human body, the obstacle 400, or the like. Meanwhile, an elastic force of the protective edge strip 12 itself can buffer an impact force after the cutting mechanism 1000 collides with the obstacle 400, thereby avoiding damage to the cutting mechanism 1000 and extending a service life of the cutting mechanism 1000. The outermost end of the cutting blade 21 is located between the inner side and the outer side of the protective edge strip 12, and the length of the protective edge strip 12 after compression is less than the maximum length between the outermost end of the cutting blade 21 and the outer side of the protective edge strip 12, so that the protective edge strip 12 can approach the outer end surface of the cutting blade 21 during compression while also avoiding exposure of the cutting blade 21 outside the protective edge strip 12. This can reduce the edge distance between the cutting blade 21 and the protective cover 10, thereby effectively cutting the cutting object at the edge of the protective cover 10.

For example, in response to the robot body 2000 driving the cutting assembly 100 to cut a cutting object in scenarios such as a passage edge, a wall surface, or a fence of a lawn, the cutting assembly 100 extends toward the passage edge, the wall surface, or the fence under the drive of the connecting assembly, or the cutting assembly 100 fits against the passage edge, the wall surface, or the fence during travel of the robot body 2000. At this time, the protective edge strip 12 deforms under squeezing by the passage edge, the wall surface, or the fence, so that the cutting blade 21 can approach the passage edge, the wall surface, or the fence, thereby effectively cutting the cutting object at the passage edge, the wall surface, or the fence. Meanwhile, in response to the cutting assembly 100 colliding with the passage edge, the wall surface, or the fence, the protective edge strip 12 can provide a buffering effect and reduce an impact force applied to the cutting assembly 100 during collision with the obstacle 400. Then, as the robot body 2000 continues to travel, the protective edge strip 12 is compressed and fits against the passage edge, the wall surface, or the fence, so that the edge distance between the cutting blade 21 and the protective cover 10 can be reduced, thereby effectively cutting the cutting object at the edge of the protective cover 10.

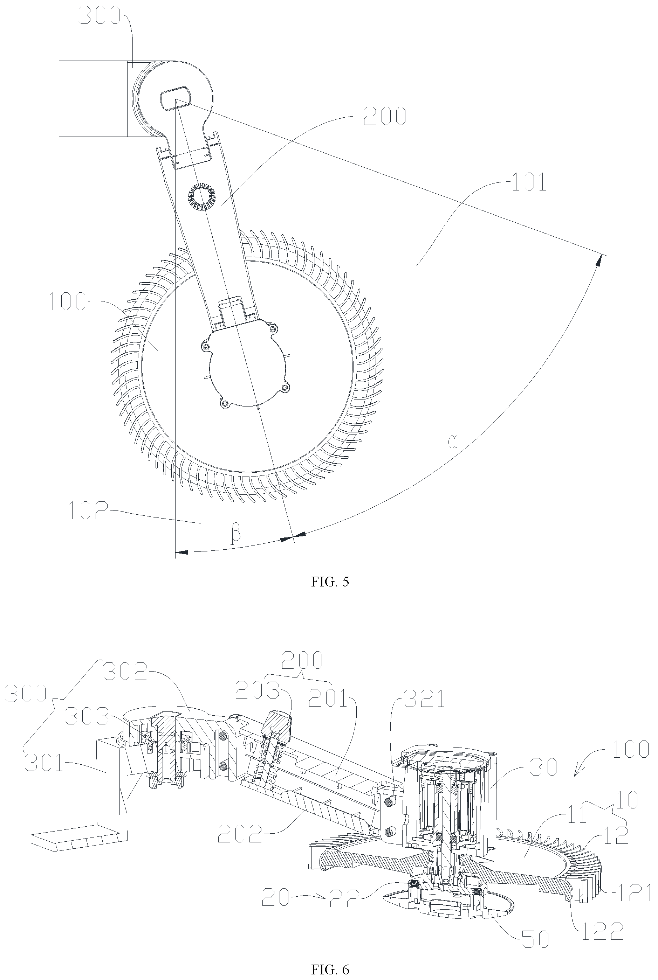

In an optional embodiment, as shown in FIG. 6, FIG. 8, and FIG. 9, the protective cover 10 comprises a cover body 11. The protective edge strip 12 has a connecting portion 122 and an anti-collision portion 121 made of a flexible material. The anti-collision portion 121 is annularly disposed on an outer side of the protective cover 10 through the connecting portion 122, and the outermost end of the cutting blade 21 is located between the connecting portion 122 and the anti-collision portion 121. The connecting portion 122 may be made of a hard rubber material and can be more firmly fixed on the cover body 11. In this embodiment, the anti-collision portion 121 and the connecting portion 122 are integrally formed through an injection molding process, so that soft and hard materials of the protective edge strip 12 can be reasonably utilized, and manufacturing cost of the protective edge strip 12 is also reduced, with advantages such as a stable structure, high strength, and a long service life.

In an optional embodiment, the anti-collision portion 121 comprises a plurality of flexible units spaced apart from each other. The flexible units extend radially outward from the connecting portion 122 and can be compressed when the protective cover 10 is subjected to force, thereby reducing a case in which the flexible units break due to friction with the obstacle 400, and also enabling the cutting blade 21 to approach the edge of the protective cover 10, so as to effectively cut the cutting object at the edge of the protective cover 10.

In an optional embodiment, as shown in FIG. 4, FIG. 8, and FIG. 9, an outward extension length of each flexible unit is greater than a spacing between two adjacent flexible units. Accordingly, when the robot body 2000 drives the cutting assembly 100 to cut a cutting object in scenarios such as a passage edge, a wall surface, or a fence of a lawn, the flexible units contact and are compressed by obstacles 400 such as the passage edge, the wall surface, or the fence. Setting the outward extension length of the flexible units to be greater than the spacing between two adjacent flexible units enables a flexible unit compressed earlier to fit against and compress a flexible unit compressed later during compression. In this way, the flexible unit compressed earlier can be buffered, and the flexible unit compressed later can also be prevented from directly colliding with the obstacle 400. Layer-by-layer compression among the flexible units can reduce noise generation, disperse force application points of the flexible units, and improve service life of the flexible units.

In an optional embodiment, the flexible units extend obliquely in a same direction along the connecting portion 122, and the flexible units are arranged counterclockwise on an outer peripheral surface of the protective cover 10. Accordingly, during the process in which the robot body 2000 drives the cutting assembly 100, in response to the cutting assembly 100 colliding with the obstacle 400, the flexible units can provide a buffering effect. As the robot body 2000 continues to drive the cutting assembly 100 to cut the cutting object, the flexible units are sequentially compressed along the obstacle 400. Because the flexible units are inclined in the same direction and arranged counterclockwise on the outer peripheral surface of the protective cover 10, a compression direction of the flexible units is also arranged counterclockwise along the protective cover 10, with one flexible unit stacked on another.

In an optional embodiment, the connecting portion 122 has an edging structure 123 made of a hard material. The edging structure 123 is disposed around an outer periphery of the cover body 11, and the anti-collision portion 121 and the edging structure 123 are integrally formed, so that the connecting portion 122 can be firmly fixed on the outer periphery of the cover body 11. Meanwhile, the anti-collision portion 121 can provide a buffering effect and reduce the edge distance between the cutting blade 21 and the protective cover 10, thereby effectively cutting the cutting object at the edge of the protective cover 10.

In an optional embodiment, the edging structure 123 is provided with an arcuate annular groove, and the connecting portion 122 fixes the arcuate annular groove on an outer side of the cover body 11 by assembly. Alternatively, the edging structure 123 is integrally formed with the cover body 11 through an injection molding process to fixedly connect the protective edge strip 12 and the cover body 11. The integral formation can reduce an assembly process between the protective edge strip 12 and the cover body 11, while fixing the arcuate annular groove on the outer side of the cover body 11 by assembly makes it possible to replace only the protective edge strip 12 when the protective edge strip 12 is damaged, without replacing the entire protective cover 10, thereby reducing use cost.

In an optional embodiment, the protective cover 10 has an edging structure 123 at least partially made of a hard material, and the protective edge strip 12 and the edging structure 123 are integrally formed, so that the soft and hard materials of the protective cover 10 can be reasonably utilized. In addition, the soft and hard materials can be processed into one piece through an injection molding process, thereby improving connection strength of the overall product. Compression can be achieved through the flexible material, which can provide a buffering effect and reduce the edge distance between the cutting blade 21 and the protective cover 10, thereby effectively cutting the cutting object at the edge of the protective cover 10.

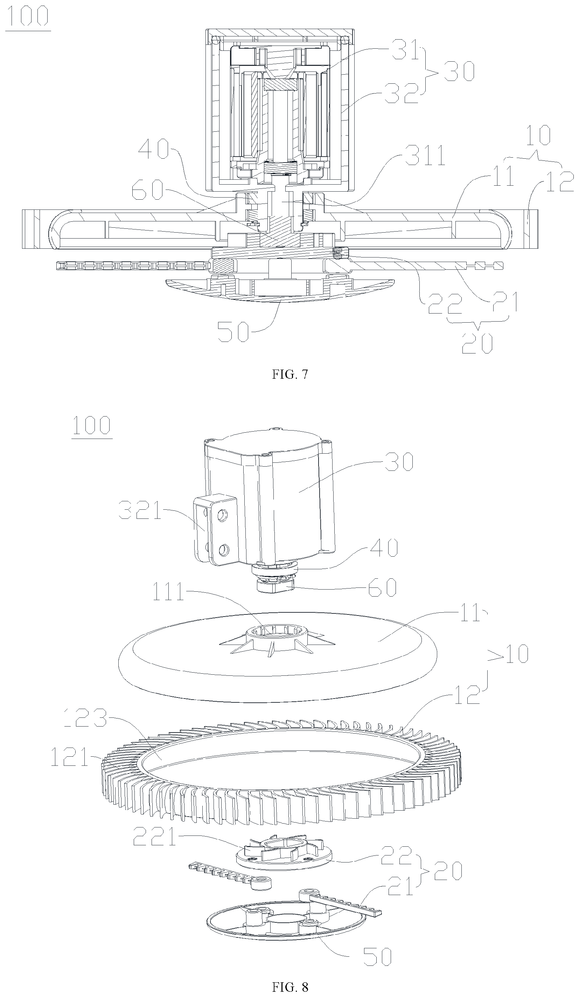

In an optional embodiment, as shown in FIG. 7 to FIG. 9, the cutting assembly 100 comprises a bearing assembly 40. The protective cover 10 is provided with a mounting hole 111, an outer ring of the bearing assembly 40 is mounted in the mounting hole 111, and an inner ring of the bearing assembly 40 is connected to the output shaft 311 of the drive motor 30, so that the protective cover 10 can rotate relative to the output shaft 311 of the drive motor 30. That is, the protective cover 10 is independent of the drive motor 30 and can rotate independently. In response to the cutting assembly 100 approaching a passage edge, a wall surface, a fence, or the like, because the protective cover 10 can rotate independently, contact friction between the protective cover 10 and the edge can be converted into rolling friction, thereby reducing damage to the protective edge strip 12 caused by friction.

In an optional embodiment, the bearing assembly 40 comprises a first bearing member and a second bearing member. Two ends of the mounting hole 111 are respectively provided with two counterbore structures 1111, namely a first counterbore and a second counterbore, so that the first bearing member and the second bearing member can be correspondingly mounted in the first counterbore and the second counterbore.

In an optional embodiment, the protective device further comprises a protective member. The protective member is disposed outside the protective cover 10, and at least a part of the protective member extends beyond an outer contour of the protective cover 10 in a forward direction of the robot, so as to effectively prevent an accidental frontal injury caused by the cutting assembly 100 at a front position, thereby improving safety of the protective cover 10.

In an optional embodiment, a protective portion is formed on the protective member. The protective portion extends toward the forward direction of the robot and beyond the outer contour of the protective cover 10, so as to prevent a frontal injury caused by the cutting assembly 100 at the front position, thereby improving safety of the protective cover 10.

In an optional embodiment, an avoidance opening is formed on the protective member. The avoidance opening is disposed toward a side of the cutting mechanism 1000 away from the robot, so that the protective edge strip 12 on one side of the avoidance opening can contact the obstacle 400 and be compressed, thereby reducing the edge distance between the cutting blade 21 and the protective cover 10 and effectively cutting the cutting object at the edge of the protective cover 10.

In an optional embodiment, the protective member comprises a protective strip. The protective strip surrounds to form a semi-ring structure having the avoidance opening. The semi-ring structure is fixedly connected to the drive motor 30 and disposed toward the forward direction of the robot, and is configured to prevent an accidental frontal injury caused by the cutting assembly 100 at the front position, thereby improving safety of the protective cover 10. The avoidance opening enables the protective edge strip 12 to be compressed when contacting the obstacle 400, reducing the edge distance between the cutting blade 21 and the protective cover 10, thereby effectively cutting the cutting object at the edge of the protective cover 10.

In an optional embodiment, the protective member may alternatively comprise a special-shaped baffle of another shape. At least a part of the special-shaped baffle extends toward the forward direction of the robot and beyond the outer contour of the protective cover 10 to form the protective portion, and at least a part of the special-shaped baffle is recessed toward an inner side thereof to form the avoidance opening, so that the protective edge strip 12 on one side of the avoidance opening can contact the obstacle 400 and be compressed, thereby reducing the edge distance between the cutting blade 21 and the protective cover 10 and effectively cutting the cutting object at the edge of the protective cover 10.

In an optional embodiment, the protective cover 10 is disposed between the drive motor 30 and the blade disc 20 and is rotatably connected to the output shaft 311 of the drive assembly, so that the protective cover 10 can protect the blade disc 20 and can also independently follow and move relative to the output shaft 311. In response to the protective cover 10 approaching a passage edge, a wall surface, a fence, or the like, frictional contact with the passage edge, the wall surface, the fence, or the like can be converted into rolling friction, thereby reducing friction damage to the protective edge strip 12.

In an optional embodiment, as shown in FIG. 6 to FIG. 8, the cutting blade 21 is provided with cutting segments 211 and protective segments 212 spaced apart from each other. The protective segments 212 are configured to prevent non-cutting objects from entering the cutting segments 211. The protective segment 212 disposed at the outermost side is located between the inner side and the outer side of the protective edge strip 12, so as to prevent the cutting segment 211 from colliding with a passage edge, a wall surface, a fence, or the like after the protective edge strip 12 is worn, thereby improving use safety of the cutting blade 21.

In an optional embodiment, the cutting segment 211 has a thin sheet-like structure to form a cutting edge for cutting, and the protective segment 212 has a thick and blunt structure and protrudes beyond a cutting end surface of the cutting segment 211. This not only protects the cutting edge, but also can tear a cutting object during cutting.

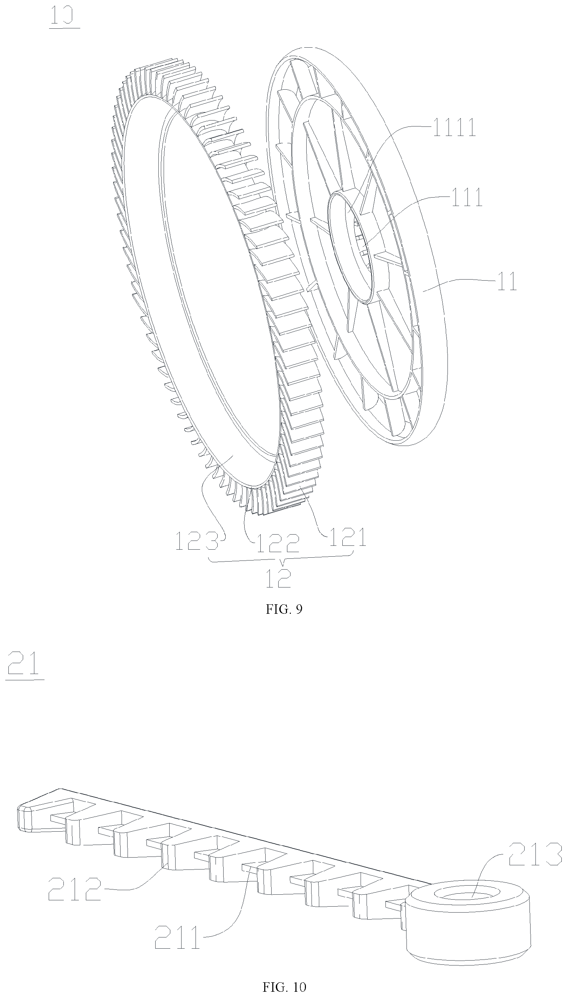

In an optional embodiment, as shown in FIG. 8 and FIG. 10, the cutting blade 21 comprises a blade body. The cutting segment 211 and the protective segment 212 are disposed on a fixed edge of the blade body and extend from the fixed edge toward a cutting edge on another side. The cutting segment 211 is mainly configured to cut a cutting object, while the protective segment 212 is configured to protect the cutting segment 211. The protective segment 212 may also be configured to tear the cutting object when the cutting segment 211 cuts the cutting object. A cross-sectional area of the protective segment 212 gradually decreases in an extension direction from the fixed edge toward the cutting edge, so that a spacing between two adjacent protective segments 212 increases along the extension direction of the protective segments 212, which is beneficial to increasing a cutting region of the cutting segment 211 and improving a cutting effect of the cutting segment 211. In addition, in response to the cutting segment 211 cutting the cutting object and failing to completely cut off the cutting object at one time, a part of the protective segment 212 located on one side of the cutting segment 211 may be used to secondarily tear the cutting object, so as to ensure a cutting effect of the robot.

In an optional embodiment, the blade disc 20 comprises a rotating disc 22. The cutting blade 21 is mounted on the rotating disc 22, and the rotating disc 22 is drivingly connected to the output shaft 311 of the drive motor 30 and configured to receive mechanical energy from the drive motor 30, so that the cutting blade 21 as a whole can perform circular motion, thereby implementing a cutting operation.

In an optional embodiment, the number of cutting blades 21 may be two or more than two. In response to the number of cutting blades 21 being two, the two cutting blades 21 are symmetrically disposed on two sides of the rotating disc 22. In response to the number of cutting blades 21 being three or more, the three or more cutting blades 21 may be arranged around a peripheral side of the rotating disc 22 in an annular array around a center of the rotating disc 22.

It should be noted that an excessive number of cutting blades 21 causes interference between the cutting blades 21, while too few cutting blades 21 reduces cutting efficiency. Therefore, two to three cutting blades 21 are optimal.

In an optional embodiment, one end of the cutting blade 21 is provided with a blade mounting portion 213, so that the cutting blade 21 can be rotatably mounted on the rotating disc 22 through the blade mounting portion 213.

In an optional embodiment, a side of the rotating disc 22 facing away from the cutting blade 21 is provided with a fan structure 221. The fan structure 221 is configured to generate airflow blown toward the cutting blade 21, and can blow out fragments generated after a cutting object is broken from the rotating disc 22, so as to prevent the fragments from entering a gap between the protective cover 10 and the rotating disc 22 and affecting operation of the drive motor 30, or even causing the drive motor 30 to be locked. In addition, the airflow can also dissipate heat from the drive motor 30, effectively avoiding an excessively high temperature of the drive motor 30.

In an optional embodiment, as shown in FIG. 6 to FIG. 8, the cutting assembly 100 comprises an abutting member 50. The abutting member 50 is disposed below the cutting blade 21 and configured to, in response to the cutting assembly 100 contacting the obstacle 400, drive the cutting blade 21 to move upward, so that the cutting assembly 100 as a whole floats upward, avoiding collision between the cutting blade 21 and the obstacle 400, thereby effectively extending a service life of the cutting blade 21. Alternatively, in response to the obstacle 400 entering the bottom of the abutting member 50 and lifting the cutting assembly 100 as a whole, the cutting speed of the cutting blade 21 can also be reduced, thereby avoiding secondary damage to the cutting blade 21.

In an optional embodiment, a side of the abutting member 50 facing away from the cutting blade 21 is an outwardly convex arcuate structure, which can reduce a contact area between the obstacle 400 and the abutting member 50. Accordingly, the cutting blade 21 can be ensured to cut slowly when contacting the obstacle 400, avoiding secondary damage to the cutting blade 21. The abutting member 50 and the drive motor 30 can also be protected, friction between the abutting member 50 and the obstacle 400 can be reduced, and a risk of damage to the drive motor 30 due to stalling can be reduced, thereby improving service life of the drive motor 30.

In an optional embodiment, the cutting assembly 100 comprises a transmission member 60. One end of the transmission member 60 is connected to the output shaft 311 of the drive motor 30, and another end of the transmission member 60 is connected to the rotating disc 22.

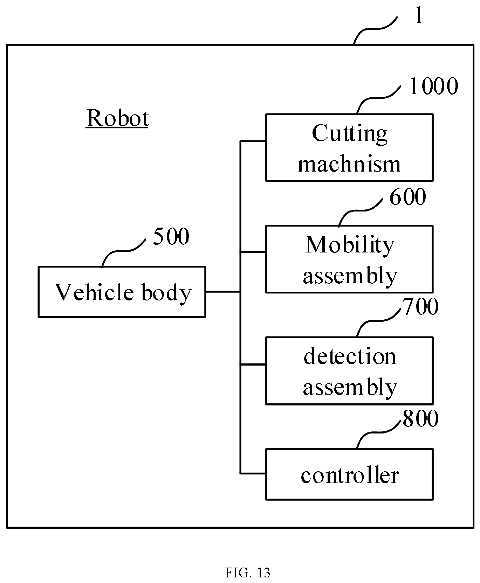

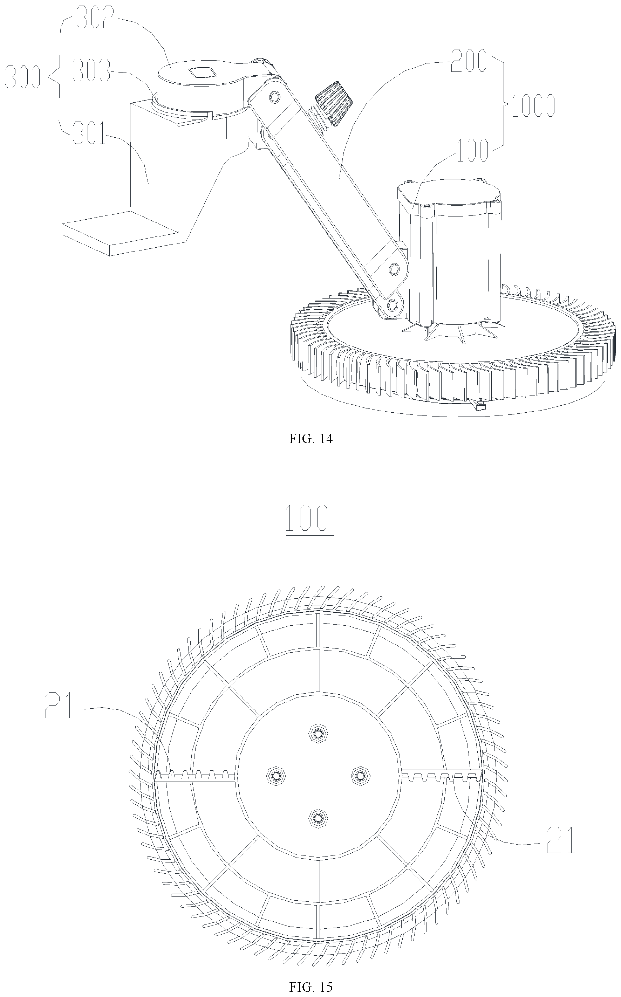

Please refer to FIG. 13 and FIG. 14. FIG. 13 is a block diagram of a module structure of a robot 1 according to an embodiment of this disclosure, and FIG. 14 is a schematic structural diagram of a cutting mechanism 1000 of the robot 1 according to an embodiment of this disclosure.

As shown in FIG. 13 and FIG. 14, in a second aspect of this disclosure, this disclosure provides a robot 1. The robot 1 comprises a vehicle body 500, a cutting mechanism 1000, a mobility assembly 600, a detection assembly 700, and a controller 800. Each part of the robot 1 is described in detail below.

Specifically, the cutting mechanism 1000 is movably connected to the vehicle body 500 to be deployed or retracted relative to the vehicle body 500, and the cutting mechanism 1000 is further configured to perform a cutting action. The mobility assembly 600 is connected to the vehicle body 500 and configured to drive the vehicle body 500 to move. The detection assembly 700 is configured to detect a position of the cutting mechanism 1000. The controller 800 is electrically connected to the detection assembly 700, the cutting mechanism 1000, and the mobility assembly 600, and is configured to control, based on the position of the cutting mechanism 1000, the cutting mechanism 1000 and/or the mobility assembly 600 to perform a corresponding action.

It should be noted that, when the controller 800 controls the cutting mechanism 1000 to perform a corresponding action, control performed on the cutting mechanism 1000 includes, but is not limited to, at least one of the following control operations: controlling the cutting mechanism 1000 to start cutting or stop cutting, controlling a position of the cutting mechanism 1000 relative to the vehicle body 500, and controlling an intensity of a cutting action performed by the cutting mechanism 1000. For example, in response to the cutting mechanism 1000 comprising a blade for cutting, a control device may adjust a movement speed, such as a rotation speed, of the blade, so as to control the intensity of the cutting action performed by the cutting mechanism 1000.

On the other hand, when the controller 800 controls the mobility assembly 600 to perform a corresponding action, control performed on the cutting mechanism 1000 is, for example, controlling the mobility assembly 600 to drive the vehicle body 500 to move to a target position, move a target distance in a target direction, or adjust a movement speed of the robot 1 through the mobility assembly 600, thereby implementing overall movement control of the robot 1.

For example, the robot 1 is a lawn mower or a robotic lawn mower, and accordingly, target objects cut by the robot 1 and the cutting mechanism 1000 are objects such as grass stems, leaves, and branches. It should be noted that current existing robotic lawn mowers, when traveling along an obstacle, are easily blocked by the obstacle, and when cutting a target object at an edge of the obstacle, the cutting mechanism 1000 encounters a problem of damage caused by excessive contact with the obstacle.

Therefore, in the robot 1 provided by the embodiments of this disclosure, intelligent control of a cutting action of the robot 1 is implemented based on position detection of the cutting mechanism 1000 by the detection assembly 700 and control of the cutting mechanism 1000 and/or the mobility assembly 600 by the controller 800. This improves a cutting effect of the robot 1 on grass at an edge of an obstacle, such as a wall, and can protect the cutting mechanism 1000 when the robot 1 cuts grass at the edge of the obstacle, such as the wall.

As shown in FIG. 14, in some embodiments, the robot 1 comprises a biasing member 303 disposed between the vehicle body 500 and the cutting mechanism 1000, and the biasing member 303 is configured to provide an acting force for returning the cutting mechanism 1000 to the first region;
wherein in response to the cutting mechanism 1000 contacting a target object, the controller 800 controls the mobility assembly 600 to drive the vehicle body 500 to move along a target travel direction, so that the cutting mechanism 1000 moves to the second region under a pressure applied by the target object and the acting force provided by the biasing member 303.

It should first be noted that, in FIG. 14, the structure denoted by reference numeral 10 is merely a part of the vehicle body 500, specifically a mounting base connected to the cutting mechanism 1000, rather than the complete structure of the vehicle body 500.

Specifically, the cutting mechanism 1000 and the vehicle body 500 form a movable connection. That is, a relative position between the cutting mechanism 1000 and the vehicle body 500 is adjustable, including deploying or retracting the cutting mechanism 1000 relative to the vehicle body 500, or adjusting a deployment extent of the cutting mechanism 1000 relative to the vehicle body 500.

The target travel direction is a direction that enables the cutting mechanism 1000 to move to the second region under the pressure applied by the target object and the acting force provided by the biasing member 303.

For example, in response to the current deployment extent of the cutting mechanism 1000 being less than the second region, the target travel direction is a direction in which the vehicle body moves away from the obstacle 400. In response to the current deployment extent of the cutting mechanism 1000 being greater than the second region, the target travel direction is a direction in which the vehicle body moves toward the obstacle 400.

Regarding the biasing member 303, it should be noted that the biasing member 303 is configured to provide an acting force for returning the cutting mechanism 1000 to the first region. That is, under only the action of the biasing member 303, the deployment extent of the cutting mechanism 1000 relative to the vehicle body 500 is a first preset extent. On the other hand, in response to the cutting mechanism 1000 being compressed and retracted toward the vehicle body 500 by an external object, the acting force provided by the biasing member 303 to the cutting mechanism 1000 is in the same direction as the deployment direction of the cutting mechanism 1000.

It should also be noted that, in response to the controller 800 determining that the cutting mechanism 1000 contacts the target object, the controller 800 controls the mobility assembly 600 to drive the vehicle body 500 to move along the target travel direction. Meanwhile, the cutting mechanism 1000 moves to the second region under the pressure applied by the target object and the acting force provided by the biasing member 303, so that a travel direction of the robot 1 bypasses the target object or travels along an edge of the target object to perform a cutting action on grass and leaves at the edge of the target object.

The target object is, for example, an obstacle 400 such as a wall or a stone.

In some embodiments, the second region is smaller than the first region. Therefore, in response to the cutting mechanism 1000 contacting the target object, the controller 800 can control an action of the mobility assembly 600 to cause the cutting mechanism 1000 to be passively retracted, and the cutting mechanism 1000 can press against the obstacle 400 under the acting force provided by the biasing member 303. Accordingly, when the robot 1 travels along an edge of the obstacle, the cutting mechanism 1000 can cut closely against the edge of the obstacle 400, thereby improving the cutting effect of the robot 1 on grass and leaves at the edge of the obstacle 400.

For example, the biasing member 303 comprises a torsion spring connected between the vehicle body 500 and the cutting mechanism 1000. The torsion spring is configured to provide an acting force for returning the cutting mechanism 1000 to the first region. In response to the cutting mechanism 1000 being compressed and retracted toward the vehicle body 500 by an external object, the torsion spring elastically deforms and applies, to the cutting mechanism 1000 based on the elastic deformation, an acting force in the same direction as the deployment direction.

Please refer to FIG. 15. FIG. 15 is a schematic structural diagram of a cutting assembly 100 of a robot 1 according to an embodiment of this disclosure.

As shown in FIG. 14 and FIG. 15, in some embodiments, the cutting mechanism 1000 comprises a connecting assembly and a cutting assembly 100 configured to perform a cutting action. The cutting assembly 100 is movably connected to the vehicle body 500 through the connecting assembly, and the cutting assembly 100 is retracted toward the vehicle body 500 under blocking by an external object;
wherein in response to the cutting assembly 100 being retracted toward the vehicle body 500 to a second position, the controller 800 controls the cutting speed of the cutting mechanism 1000 to decrease.

Specifically, the cutting assembly 100 forms a movable connection with the vehicle body 500 through the connecting assembly. That is, a relative position between the cutting assembly 100 and the vehicle body 500 is adjustable, including deploying or retracting the cutting assembly 100 relative to the vehicle body 500, or adjusting a deployment extent of the cutting assembly 100 relative to the vehicle body 500.

It should be noted that the cutting assembly 100 comprises at least one cutting assembly. For example, two cutting blades 21 are provided in the cutting structure shown in FIG. 15. The cutting speed of the cutting mechanism 1000 is a movement speed of the cutting blades 21 of the cutting assembly 100. The higher the movement speed of the cutting blades 21, the greater the cutting intensity; and the lower the movement speed of the cutting blades 21, the smaller the cutting intensity. For example, the cutting mechanism 1000 cuts grass and leaves by driving the cutting blades 21 to rotate or reciprocate.

In some embodiments, the cutting assembly 100 further comprises a drive assembly connected thereto, and the drive assembly is electrically connected to the controller and configured to drive the cutting blades 21 to rotate or reciprocate under control of the controller to cut grass and leaves.

It should be noted that the second position is a preset deployment position of the cutting assembly 100 relative to the vehicle body 500. In response to the cutting assembly 100 being retracted toward the vehicle body 500 to the second position, it may be determined that the cutting assembly 100 contacts an external object. Then, the controller 800 controls the cutting speed of the cutting mechanism 1000 to decrease, so as to avoid damage to the cutting assembly 100, such as damage to the cutting blade, in response to excessive contact between the cutting assembly 100 and the vehicle body 500, thereby protecting the cutting assembly 100. Reducing the cutting speed of the cutting mechanism 1000 can also effectively avoid mistaken cutting of a non-target cutting object, such as a human or an animal, thereby improving cutting safety.

In some embodiments, the controller 800 is further configured to adjust the cutting speed of the cutting mechanism 1000 based on the deployment extent of the cutting mechanism 1000 relative to the vehicle body 500, so that the deployment extent of the cutting mechanism 1000 relative to the vehicle body 500 is proportional to the cutting speed of the cutting mechanism 1000. The greater the deployment extent of the cutting mechanism 1000 relative to the vehicle body 500, the greater the cutting speed of the cutting mechanism 1000; and the smaller the deployment extent of the cutting mechanism 1000 relative to the vehicle body 500, the smaller the cutting speed of the cutting mechanism 1000. Accordingly, the cutting speed of the cutting mechanism 1000 can be adjusted progressively.

For FIG. 15, it should be additionally noted that the structure shown by the mobility assembly 600 in FIG. 15 is merely an example. The actual mobility assembly 600 may implement travel movement by providing four movable wheels as shown in FIG. 15, may provide a greater or smaller number of movable wheels, or may use another form of movable mechanism.

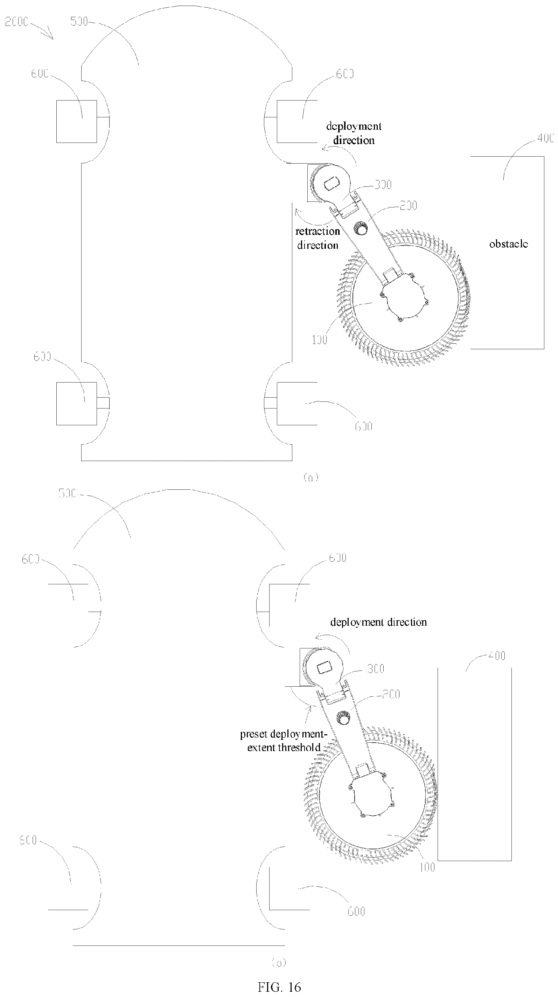

Please refer to FIG. 16. FIG. 16 is a schematic scenario diagram of deployment and retraction of the cutting mechanism 1000 in a robot 1 according to an embodiment of this disclosure.

As shown in FIGS. 16(a) and 16(b), in some embodiments, in response to a deployment extent of the cutting mechanism 1000 relative to the vehicle body 500 being less than a preset extent threshold, the controller 800 controls the mowing speed of the cutting mechanism 1000 to decrease to zero, wherein the deployment extent is determined by a positional relationship between the cutting mechanism 1000 and the vehicle body 500.

Specifically, as shown in FIG. 16(b), in response to the deployment extent of the cutting mechanism 1000 relative to the vehicle body 500 being less than the preset extent threshold, it may be determined that the cutting mechanism 1000 has been sufficiently retracted under pushing by an external object. Then, the controller 800 controls the cutting speed of the cutting mechanism 1000 to decrease to zero to avoid damage to the cutting assembly 100, thereby protecting the cutting mechanism 1000, such as the cutting blade therein. This can also effectively avoid mistaken cutting of a non-target cutting object, such as a human or an animal, thereby improving cutting safety.

As shown in FIG. 16, in some embodiments, the connecting assembly comprises a mounting assembly 300 respectively connected to the vehicle body 500 and the cutting assembly 100, and the cutting assembly 100 is rotatably fitted with the vehicle body 500 through the mounting assembly 300 to be deployed or retracted relative to the vehicle body 500;
wherein the detection assembly 700 is connected to at least one of the vehicle body 500, the mounting assembly 300, or the cutting assembly 100 to detect a rotation angle of the cutting assembly 100 relative to the vehicle body 500, and the rotation angle indicates a positional relationship between the cutting mechanism 1000 and the vehicle body 500.

Specifically, the cutting assembly 100 is rotatably fitted with the vehicle body 500 through the mounting assembly 300, and the deployment extent of the cutting assembly 100 relative to the vehicle body 500 can be adjusted by rotation. Specifically, the larger the angle by which the cutting assembly 100 rotates toward an outer side of the vehicle body 500, the larger the deployment extent of the cutting assembly 100 relative to the vehicle body 500; conversely, the smaller the deployment extent of the cutting assembly 100 relative to the vehicle body 500.

Based on this, the detection assembly 700 can conveniently and accurately measure the deployment extent of the cutting assembly 100 relative to the vehicle body 500 based on the rotation angle of the cutting assembly 100 relative to the vehicle body 500.

In some embodiments, the connecting assembly further comprises a biasing member connected between the vehicle body 500 and the cutting assembly 100. In response to the cutting assembly 100 rotating relative to the vehicle body 500, the biasing member undergoes torsional deformation:
the detection assembly 700 is further configured to detect a torsion degree of the biasing member to determine the rotation angle of the cutting assembly 100 relative to the vehicle body 500.

Specifically, the greater the torsion degree of the biasing member, the greater the deployment extent of the cutting assembly 100 relative to the vehicle body 500; conversely, the smaller the deployment extent of the cutting assembly 100 relative to the vehicle body 500. The controller 800 can determine a positional relationship between the cutting mechanism 1000 and the vehicle body 500 based on the torsion degree of the biasing member, and further determine an operating state of the robot 1 based on the positional relationship between the cutting mechanism 1000 and the vehicle body 500, for example, determining whether the cutting mechanism 1000 contacts a target object, or determining a retracted position of the cutting mechanism 1000 or the cutting assembly 100.

For example, the connecting assembly further comprises a torsion spring connected between the vehicle body 500 and the cutting assembly 100. The detection assembly 700 comprises a force sensor connected to the torsion spring, and can be configured to detect an elastic force output by the torsion spring, so as to detect the torsion degree of the biasing member and thereby determine the rotation angle of the cutting assembly 100 relative to the vehicle body 500.

In some embodiments, the connecting assembly comprises a extendable and retractable assembly connected to the vehicle body 500 and the cutting assembly 100, and the extendable and retractable assembly is configured to adjust a distance of the cutting assembly 100 relative to the vehicle body 500;
wherein the detection assembly 700 is connected to at least one of the vehicle body 500, the extendable and retractable assembly, or the cutting assembly 100 to detect a displacement distance of the cutting assembly 100 relative to the vehicle body 500, and the displacement distance indicates a positional relationship between the cutting mechanism 1000 and the vehicle body 500.

Specifically, the extendable and retractable assembly is connected between the vehicle body 500 and the cutting assembly 100, and the extendable and retractable assembly can telescopically adjust the distance of the cutting assembly 100 relative to the vehicle body 500. In response to the extendable and retractable assembly extending, the cutting mechanism 1000 is deployed and the distance of the cutting assembly 100 relative to the vehicle body 500 increases. In response to the extendable and retractable assembly being compressed, the cutting mechanism 1000 is retracted and the distance of the cutting assembly 100 relative to the vehicle body 500 decreases.

Correspondingly, the detection assembly 700 may be configured to detect the displacement distance of the cutting assembly 100 relative to the vehicle body 500. The controller 800 can determine the positional relationship between the cutting mechanism 1000 and the vehicle body 500 based on the displacement distance, and further determine an operating state of the robot 1 based on the positional relationship between the cutting mechanism 1000 and the vehicle body 500, for example, determining whether the cutting mechanism 1000 contacts a target object, or determining a retracted position of the cutting mechanism 1000 or the cutting assembly 100.

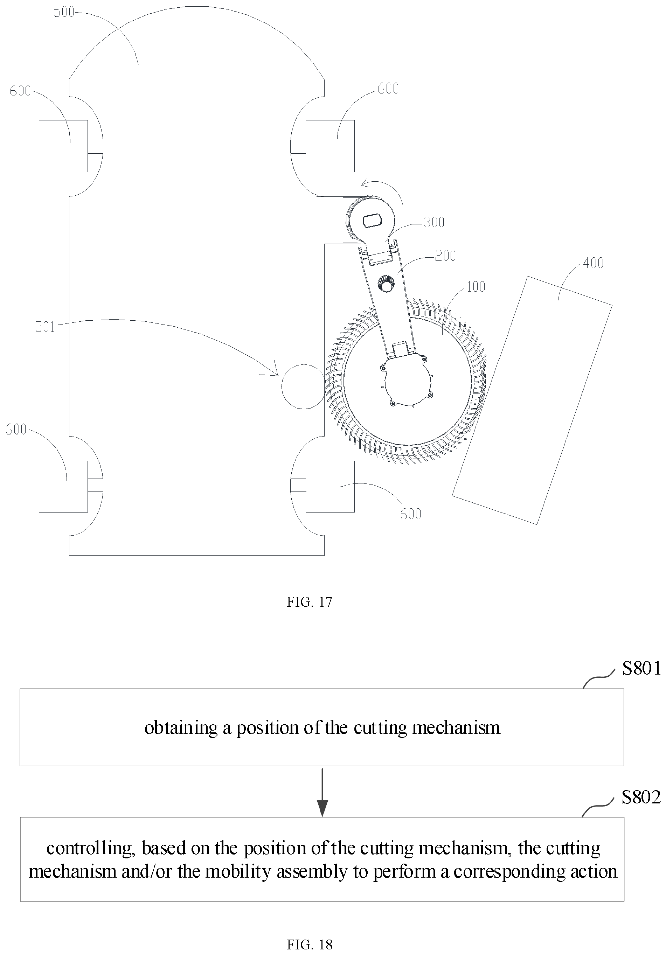

Please refer to FIG. 17. FIG. 17 is a schematic scenario diagram of collision between a cutting mechanism and a vehicle body in a robot 1 according to an embodiment of this disclosure.

As shown in FIG. 17, in some embodiments, the detection assembly 700 comprises a collision sensor disposed at a preset portion 501 of the vehicle body 500 and electrically connected to the controller 800, wherein the preset portion 501 is a portion of the vehicle body 500 that contacts the cutting mechanism 1000 in response to the cutting mechanism 1000 being retracted to a limit position;
the collision sensor is configured to, in response to colliding with the cutting mechanism 1000, output a collision signal matching a collision intensity based on the collision intensity, and the controller 800 is configured to control the cutting speed of the cutting mechanism 1000 to decrease to zero in response to the collision signal satisfying a preset condition.

Specifically, a signal feature of the collision signal output by the collision sensor matches the collision intensity. For example, the signal feature is a signal strength of the collision signal. That is, the greater the collision intensity, the higher the signal strength of the collision signal; conversely, the lower the collision intensity, the lower the signal strength of the collision signal. Correspondingly, the controller 800 can determine the collision intensity between the cutting mechanism 1000 and the vehicle body 500 based on the signal feature of the collision signal.

Further, the controller 800 is configured to control the cutting speed of the cutting mechanism 1000 to decrease to zero in response to the collision signal satisfying the preset condition. It should be noted that the collision signal satisfying the preset condition indicates that the collision intensity between the cutting mechanism 1000 and the vehicle body 500 is greater than a designed target value. At this time, the robot 1 may collide with an external object, causing the cutting mechanism 1000 to be rapidly retracted and thus collide with the vehicle body 500. Therefore, controlling the cutting speed of the cutting mechanism 1000 to decrease to zero by the controller 800 in response to the collision signal satisfying the preset condition can effectively avoid damage to the cutting assembly 100, thereby protecting the cutting mechanism 1000, such as the cutting blade therein, and improving adaptability of the cutting mechanism 1000 for cutting grass and leaves at an edge of the obstacle 400.

Please refer to FIG. 18. FIG. 18 is a schematic flowchart of a method for controlling a robot according to an embodiment of this disclosure.

As shown in FIG. 13 to FIG. 18, this disclosure further provides a method for controlling a robot 1. The robot 1 comprises a vehicle body 500 and a cutting mechanism 1000. The cutting mechanism 1000 is movably connected to the vehicle body 500 to be deployed or retracted relative to the vehicle body 500, and the cutting mechanism 1000 is further configured to perform a cutting action.

Specifically, the method for controlling the robot 1 comprises step S801 to step S802:
Step S801: obtaining a position of the cutting mechanism 1000;
Step S802: controlling, based on the position of the cutting mechanism 1000, the cutting mechanism 1000 and/or the mobility assembly 600 to perform a corresponding action.

It should be noted that the method for controlling the robot 1 provided by this disclosure may be applied to any one of the robots 1 provided by the embodiments of this disclosure or to the robot 1 shown in FIG. 13 to FIG. 17, but is not limited thereto. To clearly describe the method for controlling the robot 1, specific description is provided in this specification in conjunction with any one of the robots 1 provided by the embodiments of this disclosure and the structure of the robot 1 shown in FIG. 13 to FIG. 17:

As shown in FIG. 14 and FIG. 16, in some embodiments, the robot 1 comprises a biasing member 303 disposed between the vehicle body 500 and the cutting mechanism 1000, and the biasing member 303 is configured to provide an acting force for returning the cutting mechanism 1000 to the first region. Correspondingly, in step S802, controlling, based on the position of the cutting mechanism 1000, the mobility assembly 600 to perform a corresponding action comprises:
when the cutting mechanism 1000 contacting a target object, determining a target travel direction based on the position of the cutting mechanism 1000;
controlling the mobility assembly 600 to drive the vehicle body 500 to move along the target travel direction, wherein the target travel direction is a direction that enables the cutting mechanism 1000 to be retracted to the second region under pressure applied by the target object.

It should be noted that the target travel direction is a direction that enables the cutting mechanism 1000 to move to the second region under the pressure applied by the target object and the acting force provided by the biasing member 303.

As shown in FIG. 14 and FIG. 16, in some embodiments, in step S802, controlling, based on the position of the cutting mechanism 1000, the cutting mechanism 1000 to perform a corresponding action comprises:
in response to the cutting mechanism 1000 being retracted toward the vehicle body 500 to a second position, controlling the cutting speed of the cutting mechanism 1000 to decrease.

As shown in FIG. 14 and FIG. 16, in some embodiments, the position of the cutting mechanism 1000 comprises a deployment extent of the cutting mechanism 1000 relative to the vehicle body 500. Correspondingly, in step S802, controlling, based on the position of the cutting mechanism 1000, the cutting mechanism 1000 to perform a corresponding action comprises:
in response to the deployment extent of the cutting mechanism 1000 relative to the vehicle body 500 being less than a preset extent threshold, controlling the mowing speed of the cutting mechanism 1000 to decrease to zero.

In some embodiments, in step S801, obtaining the position of the cutting mechanism 1000 comprises:
obtaining the position of the cutting mechanism 1000 by an angle sensor, wherein the angle sensor is configured to detect a rotation angle of the cutting mechanism 1000 relative to the vehicle body 500.

As shown in FIG. 17, in some embodiments, the method for controlling the robot 1 provided by this disclosure further comprises:
obtaining a collision signal of a collision sensor, wherein the collision signal indicates that the cutting mechanism 1000 has been retracted to a limit position, and the limit position is a position of the cutting mechanism 1000 in response to the cutting mechanism 1000 contacting the vehicle body 500;
in response to the collision signal satisfying a preset condition, controlling the cutting speed of the cutting mechanism 1000 to decrease to zero.

It should be noted that, in the embodiments of the method for controlling the robot 1 proposed above, control manners of the cutting mechanism 1000 are the same as those in the embodiments of the cutting mechanism 1000 described above, and details are not described again herein.

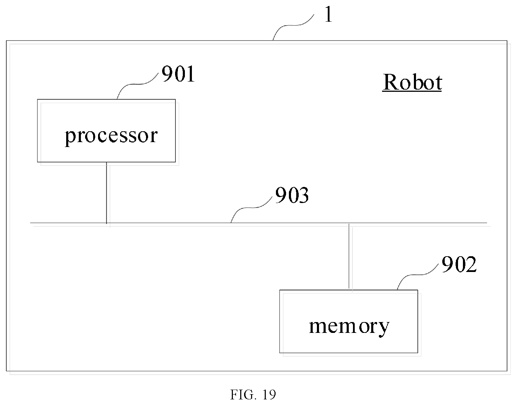

Please refer to FIG. 19. FIG. 19 is a schematic structural block diagram of another robot 1 according to an embodiment of this disclosure.

As shown in FIG. 19, an embodiment of this disclosure further provides another robot 1. The robot 1 comprises at least a processor 901 and a memory 902. The processor 901 and the memory 902 are connected through a bus 703, such as an I2C (Inter-integrated Circuit) bus.

Specifically, the processor 901 is configured to provide computing and control capabilities to support operation of the entire robot 1. The processor 901 may be a central processing unit (Central Processing Unit, CPU). The processor 901 may alternatively be another general-purpose processor 901, a digital signal processor 901 (Digital Signal Processor, DSP), an application specific integrated circuit (Application Specific Integrated Circuit, ASIC), a field-programmable gate array (Field-Programmable Gate Array, FPGA), another programmable logic device, a discrete gate or transistor logic device, a discrete hardware component, or the like. The general-purpose processor 901 may be a microprocessor 901, or the processor 901 may be any conventional processor 901 or the like.

Specifically, the memory 902 may be a Flash chip, a read-only memory 902 (ROM, Read-Only Memory), a magnetic disk, an optical disc, a USB flash drive, a mobile hard disk, or the like.

A person skilled in the art may understand that the structure shown in FIG. 19 is merely a block diagram of a partial structure related to the solutions of the embodiments of this disclosure, and does not constitute a limitation on the robot 1 to which the solutions of the embodiments of this disclosure are applied. Specifically, the robot 1 may comprise more or fewer components than those shown in the figure, may combine some components, or may have a different component arrangement.

The processor 901 is configured to run a computer program stored in the memory 902 and, in response to executing the computer program, implement any one of the methods for controlling the robot 1 provided by the embodiments of this disclosure.

An embodiment of this disclosure further provides a computer storage medium for computer-readable storage. The computer storage medium stores one or more programs, and the one or more programs may be executed by one or more processors 901 to implement steps of any one of the methods for controlling the robot 1 provided in the embodiments of this specification.

The computer storage medium may be an internal storage unit of the robot 1 in the foregoing embodiments, such as a hard disk or memory of the robot 1. The storage medium may alternatively be an external storage device equipped on the robot 1, such as a plug-in hard disk, a smart media card (Smart Media Card, SMC), a secure digital (Secure Digital, SD) card, a flash card (Flash Card), or the like.

In summary, embodiments of this disclosure provide a robot 1, a method for controlling the robot 1, and a computer storage medium. The robot 1 comprises a vehicle body 500; a cutting mechanism 1000 movably connected to the vehicle body 500 to be deployed or retracted relative to the vehicle body 500, the cutting mechanism 1000 being further configured to perform a cutting action; a mobility assembly 600 configured to drive the vehicle body 500 to move; a detection assembly 700 configured to detect a position of the cutting mechanism 1000; and a controller 800 electrically connected to the detection assembly 700, the cutting mechanism 1000, and the mobility assembly 600, and configured to control, based on the position of the cutting mechanism 1000, the cutting mechanism 1000 and/or the mobility assembly 600 to perform a corresponding action. The embodiments of this disclosure intelligently control the cutting action and the travel action of the robot 1, thereby improving the cutting effect of the robot 1 on grass and leaves at an edge of the obstacle 400, such as a wall.

It should be understood that the module structure diagrams shown in the accompanying drawings are merely illustrative examples, and it is not necessary to include all structures and connection relationships between the structures. In the description of this disclosure, unless otherwise explicitly specified and limited, terms such as "mounted", "connected", and "coupled" should be understood broadly. For example, a connection may be a fixed connection, a detachable connection, or an integral connection; may be a mechanical connection or an electrical connection; may be a direct connection or an indirect connection through an intermediate medium; or may be internal communication between two elements. A person of ordinary skill in the art may understand specific meanings of the foregoing terms in this disclosure according to specific circumstances.

It should also be understood that the terms used in this specification of this disclosure are merely for describing particular embodiments and are not intended to limit this disclosure. As used in this specification of this disclosure and the appended claims, unless the context clearly indicates otherwise, singular forms such as "a", "an", and "the" are intended to include plural forms. Moreover, in this specification of this disclosure and the appended claims, unless the context clearly indicates otherwise, "a plurality of" means at least two.

It should also be understood that the term "and/or" used in this specification of this disclosure and the appended claims refers to any and all possible combinations of one or more of the associated listed items, and includes these combinations.

It should also be understood that the term "and/or" used in this specification of this disclosure and the appended claims refers to any and all possible combinations of one or more of the associated listed items, and includes these combinations. It should be noted that, in this text, terms such as "comprise", "include", or any other variant thereof are intended to cover non-exclusive inclusion, so that a process, method, article, or system that comprises a series of elements not only comprises those elements, but also comprises other elements not expressly listed, or further comprises elements inherent to such process, method, article, or system. Without more limitations, an element defined by the phrase "comprising a ..." does not exclude the presence of another identical element in a process, method, article, or system that comprises the element.

The sequence numbers of the foregoing embodiments of this disclosure are merely for description and do not represent advantages or disadvantages of the embodiments. The above description merely describes specific embodiments of this disclosure, but the protection scope of this disclosure is not limited thereto. Any equivalent modification or replacement readily conceived by a person skilled in the art within the technical scope disclosed by this disclosure shall fall within the protection scope of this disclosure. Therefore, the protection scope of this disclosure shall be subject to the protection scope of the claims.

## Claims

1. A robot, comprising:
a robot body comprising a vehicle body and a mobility assembly, the mobility assembly being disposed on the vehicle body and configured to drive the vehicle body to travel;
a cutting mechanism comprising a connecting assembly and a cutting assembly, the cutting assembly being connected to the vehicle body through the connecting assembly and being switchable, relative to the vehicle body, between a first region and a second region;
wherein the second region is closer to the vehicle body than the first region, when the cutting assembly is in the first region, the cutting assembly is configured to operate, and when the cutting assembly is in the second region, the cutting assembly is configured to stop operating.

2. The robot according to claim 1, wherein an area of the first region is greater than an area of the second region, and when the cutting assembly moving from one position of the first region toward the second region, a cutting speed of the cutting assembly decreases.

3. The robot according to claim 1 or 2, wherein the connecting assembly comprises a rotating portion and a mounting portion connected to the vehicle body, and the cutting assembly being rotatably mounted to the mounting portion through the rotating portion and being deflectable between the first region and the second region.

4. The robot according to claim 3, wherein the connecting assembly further comprises a biasing member, and the biasing member being disposed between the rotating portion and the mounting portion and configured to drive the rotating portion to rotate toward the first region.

5. The robot according to claim 4, wherein the biasing member comprises a torsion spring, a first end of the torsion spring abuts against the rotating portion, and a second end of the torsion spring abuts against the mounting portion.

6. The robot according to claim 3, wherein the robot further comprises a detection assembly, and the detection assembly is disposed on at least one of the vehicle body or the connecting assembly and configured to detect a deflection angle of the cutting assembly, so as to control the cutting speed of the cutting assembly.

7. The robot according to claim 6, wherein the detection assembly comprises at least one of a force sensor, an angle sensor, a travel switch, or a Hall sensor electrically connected to the cutting assembly.

8. The robot according to claim 3, wherein the mounting portion is provided with a first connecting end surface, the rotating portion is provided with a second connecting end surface, and a limiting member is connected between the first connecting end surface and the second connecting end surface and configured to limit a deflection angle of the rotating portion relative to the mounting portion.

9. The robot according to claim 8, wherein the limiting member comprises a limiting groove and a limiting post engaged with the limiting groove, one of the limiting groove and the limiting post being disposed on the first connecting end surface, and another one of the limiting groove and the limiting post being disposed on the second connecting end surface.

10. The robot according to claim 3, wherein the connecting assembly further comprises a connecting arm, the cutting assembly is mounted to the rotating portion through the connecting arm, the connecting arm being rotatable relative to the rotating portion about a first rotation axis, the rotating portion is rotatable relative to the mounting portion about a second rotation axis, the rotating portion is rotatable relative to the mounting portion about a second rotation axis.

11. The robot of claim 1, wherein the cutting assembly comprises a drive motor, a cutting blade, and a protective device, the drive motor being connected to the vehicle body through the connecting assembly, and the protective device being disposed outside the cutting blade and configured to protect the cutting blade.

12. A robot, comprising:
a vehicle body;
a cutting mechanism movably connected to the vehicle body to be deployed or retracted relative to the vehicle body, the cutting mechanism being further configured to perform a cutting action;
a mobility assembly configured to drive the vehicle body to travel;
a detection assembly configured to detect a position of the cutting mechanism; and
a controller electrically connected to the detection assembly, the cutting mechanism, and the mobility assembly, and configured to:
based on the position of the cutting mechanism, control the cutting mechanism and/or the mobility assembly to perform a corresponding operation.

13. The robot according to claim 12, wherein the robot comprises a biasing member disposed between the vehicle body and the cutting mechanism, the biasing member being configured to provide an acting force for returning the cutting mechanism to a first region;
wherein when the cutting mechanism contacts a target object, the controller controls the mobility assembly to drive the vehicle body to move along a target travel direction, so that the cutting mechanism moves to a second region under a pressure applied by the target object and the acting force provided by the biasing member.

14. The robot according to claim 12 or 13, wherein the cutting mechanism comprises a connecting assembly and a cutting assembly configured to perform the cutting action, the cutting assembly is movably connected to the vehicle body through the connecting assembly, and the cutting assembly is retracted toward the vehicle body when blocked by an external object;
wherein in response to the cutting assembly being retracted toward the vehicle body to a second position, the controller controls a cutting speed of the cutting mechanism to decrease.

15. The robot according to claim 12 or 13, wherein
the controller is configured to, when a deployment extent of the cutting mechanism relative to the vehicle body is less than a preset extent threshold, reduce a cutting speed of the cutting mechanism to zero, wherein the deployment extent is determined by a positional relationship between the cutting mechanism and the vehicle body.

16. The robot according to claim 14, wherein the connecting assembly comprises a mounting assembly respectively connected to the vehicle body and the cutting assembly, and the cutting assembly is rotatably coupled to the vehicle body through the mounting assembly so as to be deployed or retracted relative to the vehicle body;
wherein the detection assembly is connected to at least one of the vehicle body, the mounting assembly, or the cutting assembly and is configured to detect a rotation angle of the cutting assembly relative to the vehicle body, and the rotation angle being indicative of a positional relationship between the cutting mechanism and the vehicle body.

17. The robot according to claim 16, wherein the connecting assembly further comprises a biasing member connected between the vehicle body and the cutting assembly, the biasing member being configured to undergo torsional deformation when the cutting assembly rotating relative to the vehicle body;
wherein the detection assembly is further configured to detect a torsion degree of the biasing member to determine the rotation angle of the cutting assembly relative to the vehicle body.

18. The robot according to claim 14, wherein the connecting assembly comprises an extendable and retractable assembly connected to the vehicle body and the cutting assembly, and the extendable and retractable assembly being configured to adjust a distance of the cutting assembly relative to the vehicle body;
wherein the detection assembly is connected to at least one of the vehicle body, the extendable and retractable assembly, or the cutting assembly and is configured to detect a displacement distance of the cutting assembly relative to the vehicle body, and the displacement distance indicates a positional relationship between the cutting mechanism and the vehicle body.

19. The robot according to claim 12 or 13, wherein the detection assembly comprises a collision sensor disposed at a preset portion of the vehicle body and electrically connected to the controller, wherein the preset portion is a portion of the vehicle body that contacts the cutting mechanism in response to the cutting mechanism being retracted to a limit position;
the collision sensor is configured to, in response to colliding with the cutting mechanism, output a collision signal matching a collision intensity based on the collision intensity, and the controller is configured to reduce the cutting speed of the cutting mechanism to zero in response to the collision signal satisfying a preset condition.

20. A method for controlling a robot, the robot comprising a vehicle body and a cutting mechanism, the cutting mechanism being movably connected to the vehicle body to be deployed or retracted relative to the vehicle body and being further configured to perform a cutting action;
the method comprising:
obtaining a position of the cutting mechanism;
based on the position of the cutting mechanism, controlling the cutting mechanism and/or the mobility assembly to perform a corresponding operation.

21. The control method according to claim 20, wherein the robot comprises a biasing member disposed between the vehicle body and the cutting mechanism, the biasing member being configured to provide an acting force for returning the cutting mechanism to a first region;
controlling, based on the position of the cutting mechanism, the mobility assembly to perform a corresponding action comprises:
in response to the cutting mechanism contacting a target object, determining a target travel direction based on the position of the cutting mechanism;
controlling the mobility assembly to drive the vehicle body to move along the target travel direction, wherein the target travel direction is a direction that enables the cutting mechanism to move to a second region under pressure applied by the target object.

22. The control method according to claim 20 or 21, wherein controlling, based on the position of the cutting mechanism, the cutting mechanism to perform a corresponding operation comprises:
in response to the cutting mechanism being retracted toward the vehicle body to a second position, controlling the cutting speed of the cutting mechanism to decrease.

23. The control method of claim 20 or 21, wherein the position of the cutting mechanism comprises a deployment extent of the cutting mechanism relative to the vehicle body;
controlling, based on the position of the cutting mechanism, the cutting mechanism to perform a corresponding operation comprises:
in response to the deployment extent of the cutting mechanism relative to the vehicle body being less than a preset extent threshold, reducing the cutting speed of the cutting mechanism to zero.

24. The control method according to claim 20 or 21, wherein obtaining the position of the cutting mechanism comprises:
obtaining the position of the cutting mechanism through an angle sensor, wherein the angle sensor is configured to detect a rotation angle of the cutting mechanism relative to the vehicle body.

25. The control method according to claim 20 or 21, wherein the method further comprises:
obtaining a collision signal of a collision sensor, wherein the collision signal indicates that the cutting mechanism has been retracted to a limit position, and the limit position is a position of the cutting mechanism in response to the cutting mechanism contacting the vehicle body;
in response to the collision signal satisfying a preset condition, reducing the cutting speed of the cutting mechanism to zero.

26. A robot, comprising at least a memory and a processor;
the memory being configured to store a computer program;
the processor being configured to execute the computer program and, in response to executing the computer program, cause the robot to implement the method of any one of claims 20 to 25.

27. A non-transitory computer-readable storage medium storing a computer program, wherein the computer program is executable by a processor to cause a robot having the processor mounted therein to implement the method of any one of claims 20 to 25.
